Europäisches Patentamt

European Patent Office

Office européen des brevets

(11) Publication number: **0 386 977**
**A1**

## EUROPEAN PATENT APPLICATION

(21) Application number: **90302318.2**

(22) Date of filing: **05.03.90**

(51) Int. Cl.⁵: **B60B 30/02, B60B 30/06, B60C 25/135**

(30) Priority: **04.03.89 GB 8905025**

(43) Date of publication of application:
**12.09.90 Bulletin 90/37**

(84) Designated Contracting States:
**BE DE FR IT**

(71) Applicant: **Taggart, Eugene**
**Lower Seagoe Industrial Estate**
**Portadown, County Armagh, Northern**
**Ireland(IE)**

(72) Inventor: **Taggart, Eugene**
**Lower Seagoe Industrial Estate**
**Portadown, County Armagh, Northern**
**Ireland(IE)**

(74) Representative: **Connor, Terence Kevin**
**T.K. Connor & Co. 19 Station Road**
**Sidcup, Kent DA15 7EB(GB)**

(54) **Vehicle tyre inflating apparatus.**

(57) A vehicle tyre inflating apparatus comprises means in the form of a stand (10) to hold a wheel hub around which a tubeless tyre (14) to be inflated is locatable. The stand (10) has a wheel hub mounting plate (22). Means are provided to inflate the tyre (14) so located, and means are provided on both lateral sides of a tyre (14) to prevent escape of air between the tyre (14) and the wheel hub rim (16) during inflation of the tyre (14). The air escape prevention means is positioning means (18) to grip areas of a tyre (14) around the wheel hub rim (16) and hold them against the wheel hub rim (16) during inflation of the tyre (14). The air escape prevention means may alternatively be a plate with one face to abut against the wheel hub rim (16) and the respective side of the tyre (14). The plate has resilient means provided on said one face to occupy the void formed between the rim (16), the side of the tyre (14) and the plate.

FIG.1.

## VEHICLE TYRE INFLATING APPARATUS.

This invention relates to an apparatus for use in fitting tubeless tyres to the rims of vehicle wheel hubs, and more particularly to the sealing of tyre beads against the wheel hub rims to allow for inflation of the tyres to proceed without the need to use inner tubes. Tubeless tyres are normally fitted to wheel hubs by the hubs being horizontally oriented and placed on a stand and a tyre located on the hub and then inflated, the force of the inflating pressure causing the tyre beads to engage and seal against the respective wheel hub rims.

A problem exists however in inflating new or repaired tubeless tyres of large diameter size suitable for, for example large tractors, trailers, earthmoving machines or such like, in that there is difficulty in obtaining a seal between the tyre beads against the respective wheel rims of the hubs simply by the accepted method used for inflating smaller tyres described above. Tyres produced by different manufacturers have different properties and the tyre beads of some tyres are much easier to seal than others. Inflating such large diametered tyres normally requires mechanical assistance, for example to initially compress each tyre peripherally inwardly while inflating it until the seal is made and then releasing the means providing the compressive force while still inflating the tyre to the correct pressure, or inflating the tyre between two axially spaced discs with the pressure force of the inflation being at an unacceptably high level to the extent that in some legal jurisdictions, this latter operation has been declared illegal.

An object of the present invention is to obviate or mitigate the aforesaid problem.

Accordingly, the present invention is a vehicle tyre inflating apparatus comprising means to hold a wheel hub around which a tubeless tyre to be inflated is locatable, means to inflate the tyre so located, and means on at least one lateral side of a tyre to prevent escape of air between the tyre and the wheel hub rim during inflation of the tyre.

Preferably, the air escape prevention means is positioning means to grip areas of a tyre around the wheel hub rim and hold them against the wheel hub rim during inflation of the tyre. The positioning means are desirably provided on both lateral sides. The positioning means are preferably suction pads in communication with a vacuum or suction source, for example a vacuum pump or a vacuum generated from an air compressor. Two or more pads are preferably provided on each lateral side equispaced apart.

Preferably also, the holding means is a stand having a horizontally oriented wheel hub mounting plate. The stand preferably includes a height adjustable column. The hub mounting plate is preferably carried on top of the column. Alternatively, the stand of the holding means has a vertically oriented wheel hub mounting plate.

Preferably further, each pad is mounted on a head having tubing connected to the source. The heads of the pads on the lower side are preferably mounted by links onto the stand. The heads of the pads on the upper side are preferably mounted by links to a framework overhanging the stand.

Alternatively, the air escape prevention means is a plate with one face to abut against the wheel hub rim and the respective side of the tyre, the plate having resilient means provided on said one face to occupy the void formed between the rim, the the side of the tyre and the plate. The resilient means may be foam material, or desirably is an inflated air bag, the side of the bag to abut against the rim and the side of the tyre of which may have a jacket of foam material. The plate may be annular or disc shape, and the resilient means is desirably annular.

Embodiments of the present invention will now be described, by way of example, with reference to the accompanying diagrammatic drawings, in which:-

Fig. 1 shows a cross-sectional view of a vehicle tyre inflating apparatus according to a first embodiment of the present invention; and

Fig. 2 shows a cross-sectional view of the apparatus according to a second embodiment.

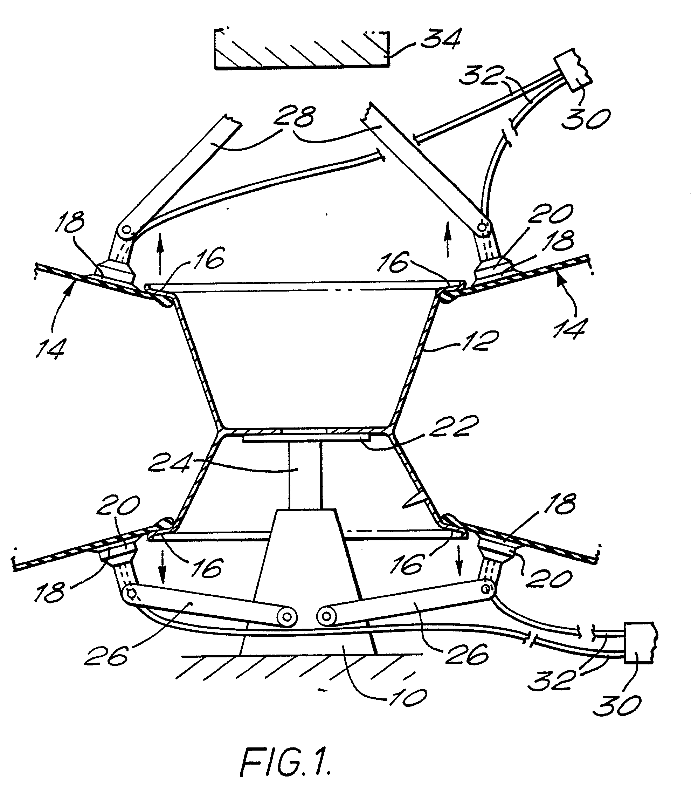

Referring to Fig. 1 of the drawings, a vehicle tyre inflating apparatus, according to a first embodiment, comprises holding means in the form of a stand 10 to receive a wheel hub 12 around which a tubeless tyre 14 to be inflated is located. The stand 10 includes a height-adjustable column 24. The stand 10 has a horizontally oriented wheel hub mounting plate 22 which is carried on top of the column 24.

Means are provided to inflate the tyre 14 so located, such inflating means being any conventional apparatus for inflating tyres.

Air escape prevention means in the form of positioning means are provided on each lateral side of a tyre 14 to grip areas of the side wall of the tyre 14 around the wheel hub rim 16 and hold them against the wheel hub rim 12 during inflation of the tyre 14. The positioning means are suction pads 18 in communication with a vacuum or suction source 30, for example a vacuum pump or a vacuum generated from an air compressor. The source 30 has a set of operation controls (not shown). Two or more pads 18 are provided on each lateral side equi-spaced apart. Each pad 18 is mounted on a head 20 having tubing 32 connected to the source. The heads 20 of the pads 18 on the lower side are mounted by links 26 onto the stand 10 as shown. The heads 20 of the pads 18 on the upper side are also mounted by links 28 to a framework 34 overhanging the stand 10.

In use, a tubeless tyre is fitted, in a collapsed state, around a wheel hub 12 mounted on the stand 10. The vacuum or suction source 30 is switched on and the pads 18 are placed on the respective side wall of the tyre next to the wheel hub rim 16 as shown. With the sides of the tyre being held against the hub rims 16 to form the seal on each lateral side of the tyre, the tyre is inflated in a conventional manner.

The above apparatus while developed to overcome the above problem can be used with any size of tyres for any type of vehicle.

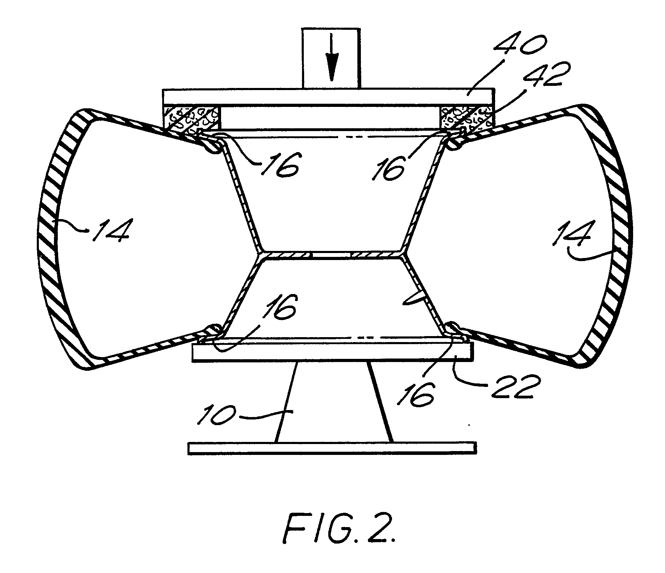

In a second embodiment shown in Fig. 2, like parts are denoted by like numerals. This embodiment is for use with very large tyres in which the side walls are much stiffer than those tyres for which the apparatus of the first embodiment is designed. The apparatus comprises holding means in the form of a stand 10 which has a horizontally oriented wheel hub mounting plate 22 which is carried on top of a column 24. The air escape prevention means is the mounting plate 22 on which the tyre and wheel hub are positioned and a plate 40 with one face to abut against the wheel hub rim 16 and the respective side of the tyre 14. The plate 40 has resilient means 42 provided on said one face to occupy the void formed between the rim 16, the side wall of the tyre 14 and the plate 40. The resilient means 42 may be foam material, or desirably is an inflated air bag with optionally the side of the bag to abut against the rim 16 and the side of the tyre 14 having a jacket of foam material. The plate 40 can be annular or disc shape, and the resilient means 42 is annular.

In use of the second embodiment, a wheel is positioned on top of plate 22 with the rim 16 is contact with the plate 22. The plate 40 is positioned over the wheel with the resilient material facing the wheel. The plate 40 is then compressed down thereonto such that the resilient material 42 occupies the void between the rim 16 the side wall of the tyre 14 and is held in that position. Due to the stiffness of the tyre side wall, the force of the plate 40 down onto the wheel also holds the other annular side wall in tight contact with the rim 16. After the wheel is so positioned and held in the apparatus, air to inflate the tyre is pumped in. Due to the tight contact of the plates 40, 22 against the wheel, no or very little air, compared to that pumped in escapes. The pressure of air then in the tyre forces the side walls to seal against the rim 16.

In a first modification of both embodiments, the stand can support the hub 12 in a vertical position with the pads 18 or plates 22, 40 operating on each lateral side.

In a second modification, the holding means can be other than a stand as shown, for example a machine having an arm to the outer end of which a hub mounting plate 22 can be secured, the arm being movable to change the attitude of the mounting plate 22 and hence the tyre. In this modification, the positioning means can be mounted to the machine directly or indirectly through a floating or movable framework.

Variations and other modifications can be made without departing from the scope of the invention described above.

## Claims

1. A vehicle tyre inflating apparatus comprising means (10) to hold a wheel hub around which a tubeless tyre (14) to be inflated is locatable, means to inflate the tyre (14) so located, and means on at least one lateral side of a tyre (14) to prevent escape of air between the tyre (14) and the wheel hub rim (16) during inflation of the tyre (14).

2. Apparatus as claimed in Claim 1, characterised in that the air escape prevention means is positioning means (18) to grip areas of a tyre (14) around the wheel hub rim (14) and hold them against the wheel hub rim (16) during inflation of the tyre (14).

3. Apparatus as claimed in Claim 2, characterised in that the positioning means (18) are provided on both lateral sides.

4. Apparatus as claimed in Claim 2 or 3, characterised in that the positioning means are suction pads (18) in communication with a vacuum or suction source (30).

5. Apparatus as claimed in Claim 4, characterised in that two or more pads (18) are provided on each lateral side equi-spaced apart.

6. Apparatus as claimed in any one of the preceding Claims, characterised in that the holding means is a stand (10) having a horizontally oriented wheel hub mounting plate (22).

7. Apparatus as claimed in any one of Claims 1 to 5, characterised in that the holding means has a stand (10) having a vertically oriented wheel hub mounting plate (22).

8. Apparatus as claimed in Claim 6 or 7, characterised in that the stand (10) includes a length-adjustable column (24).

9. Apparatus as claimed in Claim 8, characterised in that the hub mounting plate (22) is carried on the distal end of the column (24).

10. Apparatus as claimed in Claim 4 or 5, characterized in that each pad (18) is mounted on a head (20) having tubing (32) connected to the source (30).

11. Apparatus as claimed in Claim 10, characterised in that the heads (20) of the pads (18) on the lower side are mounted by links (26) onto the stand (10).

12. Apparatus as claimed in Claim 11 or 12, characterised in that the heads (20) of the pads (18) on the upper side are mounted by links (28) to a framework (34) overhanging the stand (10).

13. Apparatus as claimed in Claim 6 or 7, characterised in that the air escape prevention means is a plate (40) with one face to abut against the wheel hub rim (16) and the respective side of the tyre (14), the plate (40) having resilient means (42) provided on said one face to occupy the void formed between the rim (16), the side of the tyre (14) and the plate (40).

14. Apparatus as claimed in claim 13, characterised in that the resilient means (42) is of foam material.

15. Apparatus as claimed in Claim 14, characterised in that the resilient means (42) is an inflated air bag.

16. Apparatus as claimed in Claim 15, characterised in that the side of the bag to abut against the rim (16) and the side of the tyre (14) has a jacket of foam material.

17. Apparatus as claimed in Claim 13, characterized in that the plate (40) is disc shape, and the resilient means (42) is annular.

FIG.1.

FIG.2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-759725 (THE FIRESTONE TIRE AND RUBBER COMPANY)<br>* the whole document * | 1, 6, 8, 9, 13-17 | B60B30/02<br>B60B30/06<br>B60C25/135 |
| Y | | 2-5, 7 | |
| Y | US-A-3493029 (KIMBALL)<br>* abstract; claim 1; figures 1, 2 * | 2, 3, 5 | |
| A | | 11, 12 | |
| Y | DE-A-1505082 (EICHENAUER)<br>* page 11, line 23 - page 12, line 3; figure 5 * | 4 | |
| A | | 10 | |
| Y | PATENT ABSTRACTS OF JAPAN<br>vol. 7, no. 271 (M-260)(1416) 03 December 1983,<br>& JP-A-58 149808 (NIHON SPINDLE SEIZOU K.K.) 06 September 1983,<br>* the whole document * | 7 | |
| A | GB-A-766503 (THE FIRESTONE TIRE AND RUBBER COMPANY)<br>* the whole document * | 1, 6, 8, 9, 13-17 | TECHNICAL FIELDS SEARCHED (Int. Cl.5) |
| A | US-A-4019553 (LEFGREN)<br>* abstract; figures 1, 2 * | 1, 15, 16 | B60B<br>B60C |

The present search report has been drawn up for all claims

| Place of search | Date of completion of the search | Examiner |
|---|---|---|
| THE HAGUE | 18 MAY 1990 | MYON G.J-P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)